# EUROPEAN PATENT SPECIFICATION

(11) **EP 0 432 317 B1**
(45) Date of publication and mention of the grant of the patent: **13.07.1994**
(21) Application number: 89203198.0
(22) Date of filing: 15.12.1989
(51) Int. Cl.: A22C 21/06

(54) **Device for eviscerating slaughtered poultry**
Vorrichtung zum Ausnehmen von Schlachtgeflügel
Dispositif d'éviscération de volailles abattues

(43) Date of publication of application: 19.06.1991
(73) Proprietor: LINCO HOLLAND ENGINEERING B.V., NL-6983 BM Doesburg (NL)
(72) Inventor: Tieleman, Edward Johannes, NL-6997 AE Hoog Keppel (NL)
(74) Representative: Kooy, Leendert Willem

(56) References cited:
- EP-A- 0 094 724
- EP-A- 0 178 272
- FR-A- 1 564 448
- NL-A- 7 904 779
- NL-A- 8 104 877
- NL-A- 8 300 065
- US-A- 3 986 231
- US-A- 4 019 222
- US-A- 4 382 314
- US-A- 4 532 676

## Description

The present invention relates to a device for eviscerating slaughtered poultry in the shape of a carrousel having a plurality of eviscerating units disposed in the shape of a cylinder, each eviscerating unit being provided with an eviscerating spoon, which is pivotably mounted to a vertically movable carriage and both the pivotal movement and the vertical movement of which being controllable by means of an accompanying curve track, a leg brace being vertically movably mounted and the vertical movement of which being also controllable by means of a curve track, and a breast pressure plate being pivotably mounted to a vertically movable carriage and both the pivotal movement and the vertical movement of which being controllable by means of an accompanying curve track.

A similar device is known from Dutch patent application 81 04877. With this known device the eviscerating spoon is provided with two parallel rod portions between which at the extremities a pivotable eviscerating blade with a recess is mounted, which when introducing the spoon into the bird, lies in one plane with the rod portions and during evisceration is brought in a plane approximately perpendicular to the rod portions, which eviscerating spoon further is provided with a spherical projection at both sides of the recess, the eviscerating blade lying over its entire length between the parallel rod portions when introducing said spoon and the eviscerating blade at the side of the eviscerating spoon turned away from the support being pivotable outwardly from the plane of said rod portions. Further, the eviscerating blade is freely pivotably mounted between the rod portions and the two spherical projections are fixedly secured to said rod portions opposite the eviscerating blade. As a consequence of the construction of this known eviscerating spoon (with this known machine) the lights are at least partly eviscerated from the bird and there is a big chance that one or more ribs of the bird are broken. There is also a big chance that in addition to the lights the kidneys are also damaged, as a consequence of the rupture of the membranes of the kidneys, which is disadvantageous for the preservability of the bird.

The invention aims at removing the disadvantages of this known device.

This aim is attained in that according to the invention the eviscerating spoon is provided with a spoon-shaped blade which consists of two spaced teeth which at their free extremities are bent in the shape of a spoon, and in that the breast pressure plate at its approximately horizontally bent lower end is provided with a first neck clamping plate with a first arc-shaped recess, whereby on the carriage of said breast pressure plate opposite the lower end of the breast pressure plate a second neck clamping plate with a second arc-shaped recess is mounted which is complementary to the first arc-shaped recess.

By applying these measures it is attained that the lights of the slaugthered bird remain complete and undamaged in the slaughtered bird and no ribs are broken. Consequently, no operators are required to remove the lights from the bowels. It is also attained that the kidneys remain in the slaughtered bird and are also not damaged, so that because of the lights and kidneys remaining in the bird the slaughter yield is improved; a higher slaughter weight is obtained. Because of the fact that the kidney membranes are not damaged, the slaugthered bird obtains a much better preservability than after processing with the known eviscerating device.

Because the neck of the slaughtered bird is clamped in both arc-shaped recesses in the neck clamping plates, the slaugthered bird is fixedly secured in all directions by the leg hooks, the leg brace and the neck clamp, so that eviscerating the bowels can occur perfectly without moving the bird.

The fixation of the slaughtered bird on the eviscerating unit can yet be improved with a preferred embodiment of the eviscerating unit according to the invention, by mounting a back support and a pair of shoulder supports for the bird on the neck clamp carriage at the level of the neck clamp.

With a special appropriate embodiment of the eviscerating unit according to the invention the breast pressure plate is applied to a two-armed lever, the one arm of which being resiliently pivotable with respect to the other arm and the angle enclosed between the arms being adjustable.

By applying these measures the clamping force of the neck clamping plates, as well as the pressure force of the breast pressure plate is controllable and adjustable to the size of the slaughtered bird.

The invention will be further elucidated on the basis of the drawings with an example.
Figure 1 is a perspective view of the eviscerating device according to the invention.
Figure 2 is a perspective view of one eviscerating unit of the device according to figure 1,
Figure 3 is a graphical representation of the course of the various curve tracks of the eviscerating device according to the invention,
The figures 4A up to and including 4E show the course of the various curve tracks of the device according to the invention projected in a flat plane, and
Figure 5 is a perspective side-view of an eviscerating unit in a rotational position of 85° from the starting position of 0°.

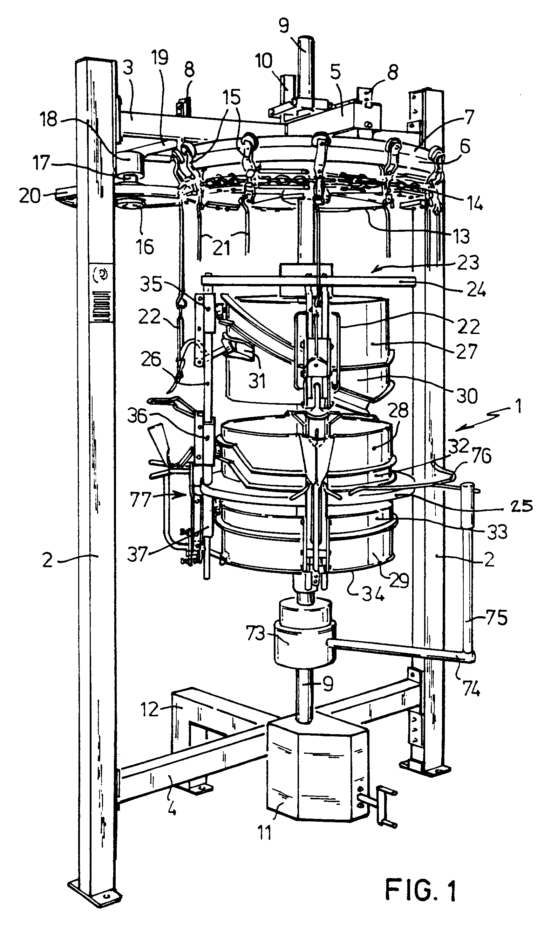

The eviscerating device according to the invention in figure 1 is provided with a support frame 1 which consists of stands 2 and cross-beams 3 and 4, a supporting beam 5 being mounted perpendicularly to the upper cross-beam 3, said supporting beam 5 providing support for a rail 6 by means of a ring 7 attached thereto, which is hung vertically adjustably with strips 8 to said supporting beam 5. In frame 1 a stationary shaft 9 is centrally supported in a bearing 10 at the upper side and a height adjusting device 11 at the lower side, the latter being secured to the lower beam 4, to which also a transverse support 12 is mounted.

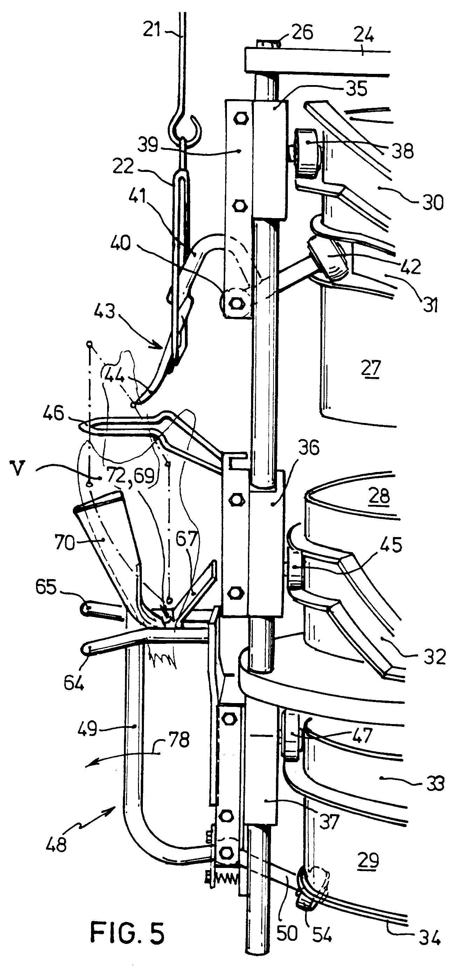

Under the rail 6 a chain wheel 13 is rotatably but axially fixedly mounted on shaft 9 by means of a supporting bushing (not shown), which chain wheel 13 optionally may be adjustable in height. Over said chain wheel 13 runs a chain 14, on which mutually spaced trolleys 15 are secured running over said rail 6. In order to have the trolleys 15 run over a large peripheral angle over said chain wheel 13 a freely rotatable wheel 16 is applied, which is mounted with an axle 17 in a bearing 18 on a support 19, which can be secured to the upper beam 3 and/or the supporting beam 5. The wheel 16 may be provided with a rubber running surface 20 which presses the links of the chain 14 into the nests of the chain wheel 13. At each trolley 15 hangs a pivotal rod 21 with a pivotable leg hook 22, in which a slaughtered bird V (figure 5) is hung with its legs.

Further, a cage 23 is mounted on the shaft 9 below the chain wheel 13 consisting of an upper plate 24, a lower plate 25 and a plurality, e.g. 12 or 16, of pairs of vertical guide rods 26 disposed along an arc of a circle. The upper plate 24 and the lower plate 25 are mounted pivotably but axially fixed, optionally adjustably, on the stationary central shaft 9 by means of bearings.

In the cage 23 an eviscerating drum 27 and a leg brace drum 28 and below the lower plate 25, a neck clamp drum 29 are fixedly secured to the central shaft 9 both in peripheral direction and axial direction. The drum 27 is provided with a curve track or lifting curve 30 and a steering curve 31, and the drum 28 with a lifting curve 32 and the drum 29 with a lifting curve 33 and a steering curve 34. The drums 27, 28 and 29 essentially consist of a metal cylinder, on which the curves 30 up to and including 34 are formed by means of fixedly welded metal strips. The drums 27, 28 and 29 may also consist of nylon cylinders having a large wall thickness in which the curve tracks are milled.

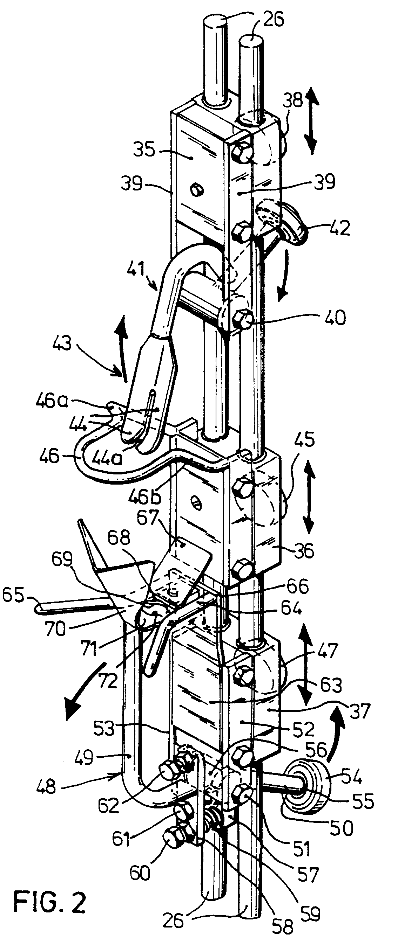

On each pair of guide rods 26 (see particularly figures 2 and 5) three carriages are axially slidably mounted, to wit from top to bottom successively, an eviscerating carriage 35, a brace carriage 36 and a clamp carriage 37. The eviscerating carriage 35 is guided at the inside in the lifting curve 30 with a guide roller 38, said lifting curve being able to move said carriage 35 in vertical direction up and down along the rods 26. On the eviscerating carriage 35 a pair of vertical strips 39 are secured, between which a shaft 40 is mounted, on which a pivotable eviscerating spoon 41 is mounted, which is steerable with a roller 42 in the curve track 31. The eviscerating spoon 41 is provided with a spoon-shaped blade 43 which consists of two substantially parallel "teeth" 44 which at their front ends are bent somewhat spoon-shaped.

The brace carriage 36 is at the inside guided with a roller 45 in the lifting curve 32 which is able to move the carriage 36 up and down in vertical direction along the rods 26. On the carriage 36 a leg brace 46 is secured which essentially consists of a U-shaped bent rod lying in a horizontal plane. In the legs of the U-shaped leg brace 46 outwardly bent portions 46a and 46b are applied, functioning as an inward stop for the legs of the slaughtered bird.

The clamp carriage 37 is at its radial inside provided with a guide roller 47, which is guided by the lifting curve 33 on the neck clamp drum 29. On said clamp carriage 37 further a neck clamping lever 48 is pivotably mounted. The lever 48 consists of two portions, to wit the neck clamping arm 49 and the steering arm 50, which are resiliently pivotable with respect to each other over a restricted angle about a shaft 51, which is mounted between two strips 52 and 53 ,which are secured alongside the carriage. The steering arm 50 is at its free end provided with a guide roller 54 which is guided on the steering curve 34 on the neck clamp drum 29. The steering arm 50 is at its other end provided with a hub 55, which is rotatable on the shaft 51, and the neck clamping arm 49 is at its end adjacent the pivot shaft 51 provided with a hub 56, which is rotatable on the shaft 51 between the hub 55 and the strip 53. Further on the hub 55 an arm 57 and on the hub 56 an arm 58 is secured, between the arms 57 and 58 a pressure spring 59 being mounted with a bolt 60 to adjust the spring tension. Further between the arms 57 and 58 an adjusting bolt 61 for adjusting the neck clamp opening (will be elucidated hereinafter) is mounted and finally an adjusting bolt 62 is mounted on the arm 58 functioning as an inward stop for the neck clamping arm 49. The adjusting bolts 60, 61 and 62 may each be provided with a lock nut.

At the front side of the carriage 37 a vertical supporting plate 63 is mounted, which at the front side at the upper edge is provided with V-shaped outwardly bent guide pins 64 and 65, between which pins 64 and 65 a small supporting plate 66 is mounted on the vertical supporting plate 63 and on which small supporting plate 66 a neck support 67 is secured, which is inwardly and upwardly directed at an angle of 45°. Between the pins 64 and 65 a second small horizontal neck clamping plate 68 is yet secured below the small supporting plate 66, in which clamping plate 68 at the front edge a partly circle-shaped recess 69 is applied functioning to pick up the neck of slaughtered poultry.

The neck clamping arm 49 carries at its free end a hand-shaped bent pressure plate 70 providing support to the breast of the slaughtered bird. The horizontal portion at the bent lower end of the pressure plate 70 is at the radial inside provided with a neck clamping plate 71 having a partial circular recess 72 cooperating with the partial circular recess 69 in the small supporting plate 68.

On the stationary shaft 9 a hub 73 is yet secured, to which a radial arm 74 is fixed, which at its free end is provided with a vertical rod 75 carrying at its upper end a guide brace 76 functioning to press the neck clamping lever 48 in the direction of the arrow 77 (figure 1), so that the neck of the bird (not shown) can be broken.

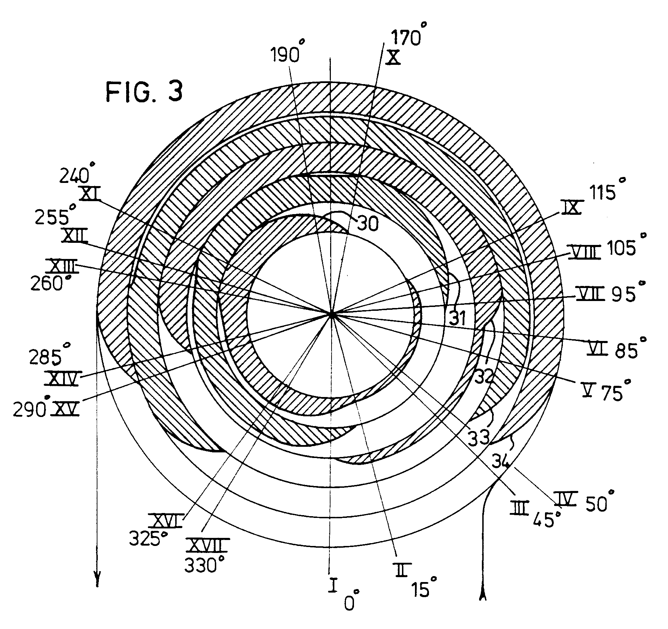

Now the course of the movements of the different active components of the eviscerating device will be described on the basis of figures 3 up to and including 5. Thereby it is started from a rotational position I of the carrousel of 0°, which is displaced back over an angle of 45 ° with respect to the rotational position III of 45° of the carrousel when the birds enter into the carrousel, see figure 3. In figure 5 a slaughtered bird V is drawn, as well as the course of movement of the lower point of the spoon 43, consequently of the teeth 44 of the spoon, during the eviscerating cycle.

### 1. Rotational position I-0°

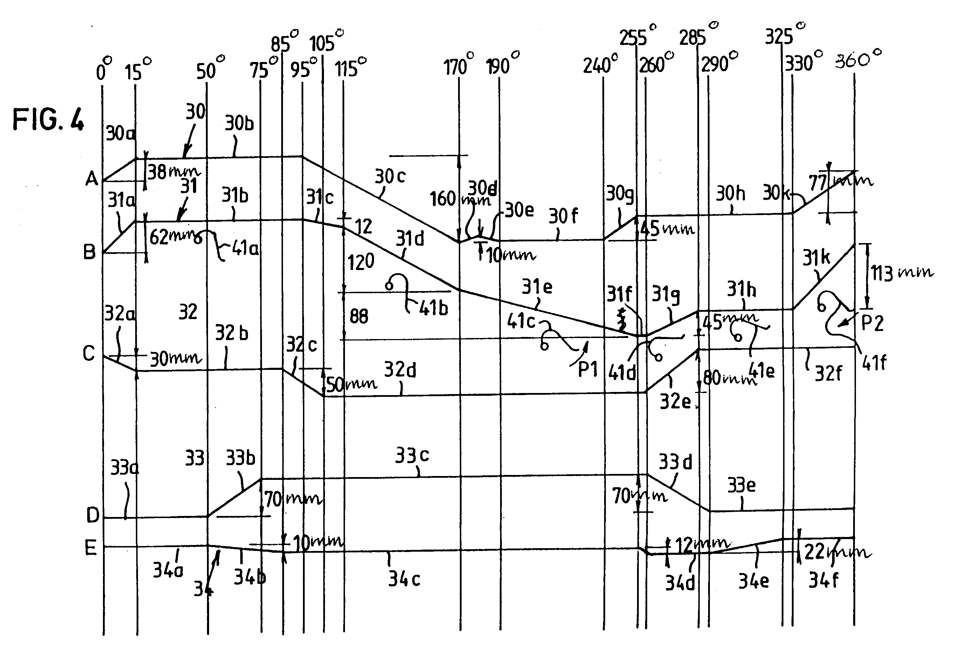

The guide roller 38 is on the portion 30a of the eviscerating curve 30 and the carriage 35 with the spoon 41 at a distance of 38 mm below the highest position. The position of the eviscerating spoon 41 corresponds with that of the spoon 41f in figure 4B, in which the guide roller 42 is on the portion 31a of the curve 31 at a distance of 62 mm below the highest position.

The guide roller 45 of the brace carriage 36 is on the portion 32a of the curve 32 and the carriage 36 with the brace 46 is in its highest position.

The guide roller 47 of the clamping carriage 49 is on the portion 33a of the curve 33 and the clamping carriage 37 is in its lowest position, the starting position.

The guide roller 54 of the neck clamping lever 48 is on the portion 34a of the curve 34 and the neck clamping arm 49 is in its completely open postion, that is to say the position in which it is rotated maximally radially outwardly.

### 2. Rotational position II-15°

The eviscerating carriage 35 is moved upwardly over 38 mm in its highest position and the eviscerating spoon 41 has been rotated in clockwise direction from the position 41f (figure 4B) into the position 41a, that means into the entering position, which position the spoon takes when entering the slaugthered bird in the device (rotational position III-45°).

The leg brace 46 is lowered over at a distance of 30 mm into the entering position.

### 3. Rotational position III-45°

The slaughtered bird V has arrived in the entering position with respect to the eviscerating unit, hanging with its legs at the leg hook 22.

### 4. Rotational position IV-50°

The eviscerating carriage 35 with the eviscerating spoon 41 and the brace carriage 36 with the leg brace 46 are with their guide rollers 38, 42 and 45 respectively on the horizontal curve track portions 30b, 31b and 32b respectively and their position and place does not change over the angle of rotation of 15° to 95°, and 15° to 85°, respectively.

In this rotational position the slaughtered bird is moved inwardly with its legs at both sides along the U-shaped leg brace 46 up to and against the outwardly protruding stop portions 46a and 46b thereof.

The guide roller 47 arrives on the curve portion 33b and subsequently moves upwardly with the neck clamp carriage 37, whereas the guide roller 54 moves on the curve portion 34b and the neck clamping lever rotates from its maximum radially outwardly rotated position in a radially inward direction, thus clockwise in figure 5.

### 5. Rotational position V-75°

The neck clamp carriage 37 is moved upwardly over the curve portion 33b, over a distance of 70 mm into its highest position, each slauthered bird V being lifted up to a fixed height by means of the guide or support pins 64 and 65.

### 6. Rotational position VI-85°

By the combination of movements, which are given the to the carriage 37 and the lever 48 by the curve portions 33b and 34b, the neck clamping lever is rotated from its radially outwardly rotated position into a radially inward position over an angle of 50° into the position according to figure 5, in which the pressure plate 70 is resiliently pressed against the breast of the slaughtered bird by means of the spring 59 and the arc-shaped recesses 69 and 72 resiliently clamping the neck of the slaughtered bird V, the neck and shoulder portion of the bird V being pressed against the neck support 67 and the back of the slaugthered bird being pressed against the radial outside of the leg brace carriage 36.

Further the leg brace 46 starts to move from the rotary position VI-85° downwardly between the legs of the slaughtered bird V by means of the curve portion 32c.

### 7. Rotational position VII-95°

The guide roller 38 arrives on the curve portion 30c and the eviscerating carriage 35 starts to move downwardly. The guide roller 42 arrives on the curve portion 31c and the eviscerating spoon 41, being disposed somewhat radially inward to be able to let pass the tail of the slaughtered bird V, position 41a in figure 4B, starts to rotate radially inwardly.

### 8. Rotational position VIII-105°

The leg brace 46 is lowered with the carriage 36 over a distance of 50 mm over the curve portion 32c. The guide rollers 47 and 54 of the neck clamp carriage 37 and the neck clamping lever 48, respectively are on the horizontal curve portions 33c and 34c, respectively, extending up to the rotational position of 260°, during which rotation of the eviscerating unit the carriage 37 and the lever 48 remain stationary.

### 9. Rotational position IX-115°

The eviscerating spoon 41 is rotated into its substantially vertical position 41b, figure 4B and in this position subsequently starts to move downwardly with the carriage 35 into the carcass of the slaughtered bird V over the curve portions 30c and 31d.

Between the rotational positions of 115° and 170° the guide rollers 38 and 42 move over the curve portions 30c and 31d, which are parallel, so that the position of the eviscerating spoon 41 does not change (41b in figure 4B), during its downward movement into the carcass of the bird V. The eviscerating carriage 35 and consequently also the eviscerating spoon 41 are lowered over a distance of 160 mm between 95° and 170°, that means the maximum stroke of the eviscerating carriage 35.

During the downward movement of the eviscerating spoon 41 into the carcass of the slaughtered bird V, the teeth of the spoon 44 slide downwardly along the rib cage, the backbone of the bird V moving between the teeth of the spoon 44 through the slit 44a, and the teeth of the spoon moving as it were below the bowels.

During this downward movement of the eviscerating spoon 41 the leg brace carriage 36 and the neck clamp carriage 37 and consequently also the leg brace 46 and the neck clamping lever 48 remain in the position and at the place respectively,taken in the rotational position of 105°, 75° and 85°, respectively, because the concerned guide rollers 45 , 47 and 54 are on the horizontal curve portions 32d, 33c and 34c respectively. The curve portions 32d, 33c and 34c remain horizontal until in the rotational position of 260°.

### 10. Rotational position X-170°

In this rotational position the eviscerating carriage 35 and consequently also the eviscerating spoon 41 are lowered into their lowest position and the latter stands as it were as a spade under the bowels.

From the rotational position X of 170° the eviscerating carriage 35 moves upwardly over 10 mm up into the rotational position of 180° and then moves downwardly again over 10 mm up to the rotational position of 190° by means of the curve portions 30d and 30e, as a result of which the points of the teeth of the spoon 44 can follow the internal shape of the breast cavity of the bird V, whereby the bowels remain on top of the spoon 43.

From the rotational position of 170° the eviscerating spoon 41 starts to carry out a counter-clockwise rotation in the direction of the arrow P1 (spoon position 41c in figure 4B), the eviscerating carriage 35 following the curve track portions 30d, 30e and 30f and the guide roller 42 of the spoon 41 following the curve portion 31e. The rotation of the eviscerating spoon 41 continues in the direction of the arrow P1 up to the rotational position of 255°. The eviscerating carriage 35 remains at the same height until in the rotational position of 240°; curve portion 30f.

### 11. Rotational position XI-240°

The eviscerating carriage 35 arrives with the roller 38 on the curve track portion 30g and moves upwardly over distance of 45 mm to pull the bowels upwardly from the carcass of the bird V, the eviscerating spoon 41, as indicated above, still rotating in the direction of the arrow P1.

### 12. Rotational position XII-255°

The eviscerating spoon 41 is now rotated over an angle of 90° in the direction of the arrow P1 into a substantial horizontal position (position 41d in figure 4B) and the eviscerating carriage 35 with the spoon 41 and the bowels on top thereof is arrived in its highest position by means of the curve portion 30g.

Between the rotational position of 255° and that of 260° the position of the eviscerating spoon 41 (position 41d) does not change; curve portion 31f.

### 13. Rotational position XIII-260°

The eviscerating carriage 35 arrives with the roller 38 on the curve portion 30h and remains at the same height until in the rotational position of 330°. From the rotational position of 260° the roller 42 of the spoon 41 arrives on the curve portion 31g and moves upwardly over an angle of rotation of 25° over a distance of 45 mm, the spoon 41 rotating clockwise from the horizontal position over an angle of 20° in the direction of the arrow P2.

Between 260° and 285° the leg brace 46 moves upwardly over a distance of 80 mm by means of the curve portion 32e, as a result of which a cup-shaped space is defined with the eviscerating spoon 43, in which the bowels are enclosed. In the rotational position of 260° the neck clamping arm 49 contacts the guide 76 (figure 1) and is thereby pressed relatively suddenly radially inwardly over a distance of 12 mm, as a result of which the neck clamping plates 68 and 71 break the neck of the bird V with the arc-shaped recesses 69 and 72.

In the rotational position of 260° the neck clamp carriage 37 with the roller 47 on the curve portion 33d starts to move downwardly over a distance of 70 mm to loosen the neck of the bird V sufficiently from the neck skin and the body, the downward movement being continued until in the rotational position of 290°. The neck clamping arm 49 remains in the position, in which the neck is broken, until in the rotational position of 290°, the roller 54 moving over the curve portion 34b.

### 14. Rotational position XIV-285°

Therewith the eviscerating spoon 41 is rotated downwardly over 20° in the direction of the arrow P2 (position 41e) and the leg brace 46 is arrived in its highest position, so that an optimal cup-shaped space is attained to enclose the bowels.

The eviscerating spoon 41 subsequently remains in the position 41e with the roller 42 on the horizontal curve part 31h until in a rotational position of 330° and the leg brace 46 arrives with the carriage guide roller 45 on the horizontal curve portion 32f and remains thereon, until the starting position I of 0° is reached.

### 15. Rotational position XV-290°

The neck clamp carriage with the roller 47 on the curve portion 33d is lowered over a distance of 70 mm into its lowest position, by which the neck (the internal part thereof) is pulled off almost completely from the bird, but still hangs loosely at the skin of the neck. The guide roller 47 of the neck clamp carriage 37 arrives on the horizontal curve portion 33e following the curve portion 33a and remains in this position until the rotational position IV-50° is reached again.

The chain 14 running over the chain wheel 13 now starts to run off the chain wheel, as a result of which the chain 14 via the pivotal rod 21 and the leg hook 22 tries to pull the slaughtered bird V from the eviscerating unit in radial direction to the outside, whereas the guide roller 54 of the neck clamping lever 48 arrives on the curve portion 34e, which slopes up 22 mm in vertical direction, as a result of which the neck clamping lever 48 starts to rotate radially outwardly in the direction of the arrow 78 (figure 5) until in the rotational position of 325° and loosens the neck clamp 69, 72. Now the slaughtered bird starts to move away from the eviscerating device, whereas the bowels, which are enclosed in the cup-shaped space, still follow the eviscerating unit.

### 16. Rotational position XVI-325°

The neck clamping lever 48 is now rotated completely outwardly in the direction of the arrow 78 (figure 5) and the slaughtered bird V is free. The guide roller 54 of the lever 48 arrives on the horizontal portion 34f of the curve 34 which is connected to the horizontal portion 34a and remains in this position, as well as the neck clamping lever 48, until in the rotational position IV-50° .

### 17. Rotational position XVII-330°

The roller 38 of the eviscerating carriage 35 arrives on the curve portion 30k of the eviscerating curve 30 and the carriage 35 is pushed upwardly over a distance of 115 mm over the curve portion 30k and the curve portion 30a connected thereto until in the rotary position II of 15°. At the same time the roller 22 arrives on the curve portion 31k of the curve 31, to which the curve portion 31a is connected, as a result of which the spoon lever 41 with the spoon 43 rotates clockwise downwardly in the direction of the arrow P2 from the position 41e via the position 41f (figure 4B) and the bowels slide off the spoon 43 and remain hanging on the back side of the slaughtered bird V. After that the slaughtered bird is carried to the next processing station by the transport chain. The described eviscerating unit is now suitable for the next processing cycle of a slaughtered bird V.

The above mentioned values as the number of degrees of angles, and the number of millimeters of covered distances and sizes should be considered as approximation values, because these are variable, on the one hand as a consequence of admissible tolerances and on the other hand as a consequence of changes and adjustments at the machine, e.g. to adapt it to the size of the slaughtered birds to be processed.

## Claims

1. A device for eviscerating slaughtered poultry (V) in the shape of a carrousel having a plurality of eviscerating units disposed in the shape of a cylinder, each eviscerating unit being provided with an eviscerating spoon (41), which is mounted pivotably to a vertically movable carriage (35) and both the pivotal movement and the vertical movement of which being controllable by means of an accompanying curve track (30 and 31, respectively), a leg brace (46) being vertically movably mounted and the vertical movement of which being also controllable by means of a curve track (32), and a breast pressure plate (70) being pivotably mounted to a vertically movable carriage (37) and both the pivotal movement and the vertical movement of which being controllable by means of an accompanying curve track (33 and 34, respectively), **characterized in that** the eviscerating spoon (41) is provided with a spoon shaped blade (43) which consists of two spaced teeth (44), which at their free ends are bent in the shape of a spoon, and that said breast pressure plate (70) at its approximately horizontally bent lower end is provided with a first neck clamping plate (71) having a first arc-shaped recess (72), whereby on said carriage (37) of said breast pressure plate (70) opposite the lower end of said breast pressure plate, a second neck clamping plate (68) with a second arc-shaped recess (69) is mounted, which is complementary to said first arc-shaped recess (72).

2. An eviscerating unit according to claim 1, **characterized in that** on the neck clamp carriage (37) at the level of the neck clamp (69, 72), a back-rest (67) and a pair of shoulder supports (64, 65) are mounted for the slaughtered bird (V).

3. An eviscerating unit according to claim 1 or 2, **characterized in that** said breast pressure plate (70) is applied to a two-armed lever (48), the one arm (49) of which being resiliently pivotable with respect to the other arm (50) and whereby the angle enclosed between the arms is adjustable.

4. An eviscerating unit according to claim 3, **characterized in that** the one arm (49) of the two-armed lever (48), which carries the breast pressure plate (70), is pressed inwardly in radial direction by means of a guide rod (76), in such a way, that the size of the opening between the arc-shaped recesses (72 and 69) in the neck clamping plates (71 and 68, respectively) is made smaller, at least for a short time, than the cross-sectional surface of the neck of the slaughtered bird (V).

## Patentansprüche

1. Vorrichtung zum Ausnehmen von Schlachtgeflügel (V) in Form einer Karussell mit mehreren in Form eines Zylinders angeordneten Ausnehmeinheiten, wobei jede Ausnehmeinheit mit einem Ausnehmlöffel (41) versehen ist, der gelenkig an einem vertikal bewegbaren Schlitten (35) montiert ist und dessen Drehbewegung und Vertikalbewegung mittels einer dazugehörigen Kurve-bahn (30 bzw. 31) steuerbar ist, mit einem Beinbügel (46), der vertikal bewegbar montiert ist und dessen Vertikalbewegung auch mittels einer Kurvebahn (32) steuerbar ist, und mit einer Brustdruckplatte (70) versehen ist, die drehbar an einem vertikal bewegbaren Schlitten (37) montiert ist und wovon sowohl die Drehbewegung als die Vertikalbewegung mittels einer dazugehörigen Kurvebahn (33 bzw. 34) steuerbar ist, **dadurch gekennzeichnet**, dass der Ausnehmlöffel (41) ein löffelformiges Blatt (43) aufweist, das aus zwei auf Abstand von einander stehenden Zähnen (44) besteht, die an ihrem freien Ende löffelförmig umgebogen sind, und dass die Brustdruckplatte (70) an seinem ungefär horizontal umgebogenen Unterende eine erste Nackenklemmplatte (71) mit einer ersten kreisbogenförmigen Aussparung (72) aufweist, wobei am Schlitten (37) der Brustdruckplatte (70) gegenüber dem Unterende der Brustdruckplatte eine zweite Nackenklemmplatte (68) mit einer zweiten kreisbogenförmigen Aussparung (69) montiert ist, die komplementär zur ersten kreisbogenförmigen Aussparung (72) ist.

2. Ausnehmeinheit nach Anspruch 1, **dadurch gekennzeichnet**, dass am Nackenklemmschlitten (37) in Nackenklemmhöhe (69, 72) eine Rückenstütze (67) und ein Paar Schulterstützen (64, 65) für den Schlachtvogel (V) montiert sind.

3. Ausnehmeinheit nach Anspruch 1 oder 2, **dadurch gekennzeichnet**, dass die Brustdruckplatte (70) an einem zweiarmigen Hebel (48) angeordnet ist, dessen einer Arm (49) federnd scharnierbar mit dem anderen Arm (50) verbunden ist und wobei der Winkel zwischen den Armen verstellbar ist.

4. Ausnehmeinheit nach Anspruch 3, **dadurch gekennzeichnet**, dass der eine Arm (49) des zweiarmigen Hebels (48), der die Brustdruckplatte (70) trägt, mittels einer Führungsstange (76) in radialer Richtung nach innen andrückbar ist, derart dass die Grösse der Öffnung zwischen den kreisbogenförmigen Aussparungen (72 und 69) in den Nackenklemmplatten (71 bzw. 68) zumindest kurz kleiner wird als die Querschnittfläche des Schlachtvogelnackens (V).

## Revendications

1. Dispositif pour éviscérer des volailles abattuez (V) présentant la forme d'un carrousel ayant une pluralité d'unités d'éviscération disposées sous la forme d'un cylindre, chaque unité d'éviscération étant munie d'une cuillère d'éviscération (41) qui est montée pivotante sur un chariot (35) mobile dans la direction verticale et dont le mouvement de pivotement et le mouvement vertical peuvent être commandés chacun au moyen d'une piste de came correspondante (30 et 31 respectivement), d'une entretoise de pattes (46) qui est montée mobile dans la direction verticale et dont le mouvement vertical peut aussi être commandé au moyen d'une piste de came (32), et d'une plaque (70) de pression de poitrine qui est montée pivotante sur un chariot (37) mobile dans la direction verticale, et dont le mouvement de pivotement et le mouvement vertical peuvent être commandés chacun au moyen d'une piste de came correspondante (33 et 34 respectivement), caractérisé en ce que la cuillère d'éviscération (41) est munie d'une lame (43) en forme de cuillère composée de deux dents espacées (44) qui sont recourbées en cuillère à leurs extrémités libres, et en ce que ladite plaque (70) de pression de poitrine est munie, à son extrémité inférieure recourbée à peu près à l'horizontale, d'une première plaque (71) de serrage du cou ayant une première échancrure (72) en forme d'arc cependant que, sur ledit chariot (37) de ladite plaque (70) de pression de poitrine, est montée, en face de l'extrémité inférieure de ladite plaque de pression de poitrine, une deuxième plaque (68) de serrage de cou munie d'une deuxième échancrure (69) en forme d'arc, qui est complémentaire de la première échancrure (72) en forme d'arc.

2. Unité d'éviscération selon la revendication 1, caractérisée en ce qu'un repose-dos (67) et une paire de supports d'épaules (64, 65) pour la volaille abattue sont montés sur le chariot (37) de pince de cou, au niveau de la pince de cou (69, 72).

3. Unité d'éviscération selon la revendication 1 ou 2, caractérisée en ce que ladite plaque (70) de pression de poitrine est montée sur un levier à deux bras (48) dont un bras (49) est monté pour pivoter élastiquement par rapport à l'autre bras (50), l'angle inclus entre les bras étant réglable.

4. Unité d'éviscération selon la revendication 3, caractérisée en ce que le premier bras (49) du levier à deux bras (48) qui porte la plaque (70) de pression de poitrine, est pressé vers l'intérieur dans une direction radiale au moyen d'une tige de guidage (76) de telle manière que la dimension de l'ouverture entre les échancrures en forme d'arc (72 et 69) des plaques (71 et 68 respectivement) de serrage du cou est réduite, au moins pendant un temps bref, à une dimension plus petite que la section de surface du cou de la volaille abattue (V).
